# EUROPEAN PATENT SPECIFICATION

(11) **EP 1 944 702 B1**
(45) Date of publication and mention of the grant of the patent: **25.07.2018**
(21) Application number: 07000468.4
(22) Date of filing: 10.01.2007
(51) Int. Cl.: G06F 17/30

(54) **Updatable navigation database**
Aktualisierbare Navigationsdatenbank
Base de données de navigation adaptée à être mise à jour

(43) Date of publication of application: 16.07.2008
(73) Proprietor: Harman Becker Automotive Systems GmbH, 76307 Karlsbad (DE)
(72) Inventor: Wellman, Harald c/o innovative systems GmbH, 20537 Hamburg (DE)
(74) Representative: Grünecker Patent- und Rechtsanwälte PartG mbB

(56) References cited:
- EP-A2- 1 385 102
- EP-A2- 1 473 543
- JP-A- 2002 296 042
- US-A- 6 018 695
- US-A1- 2004 104 842
- US-B1- 6 289 276

## Description

### Field of Invention

The present invention relates to databases, in particular, navigation databases in navigation systems. The invention particularly relates to navigation databases in vehicle navigation systems that are updateable by partial and incremental updates.

### Background of the Invention

Navigation systems become more and more prevalent in present-day vehicles, in particular, in mid- and high-class automobiles. The navigation systems perform route guidance to a pre-determined destination selected by the user. Both route guidance and operation by the user may be performed verbally by a speech control/recognition system and/or by means of a display device.

US 2004/0104842 A1 discloses an information system for providing services including traffic and navigation services, as well as other information services to a driver. One versions of the system makes use of existing components of a wireless telephone system, for example, by using the input and output capabilities of a telephone handset. Another version is a portable system that includes multiple switches for initiating access to a remote server in one of a number of operating modes. For instance the system has switches for initiating traffic information, roadside assistance, personal information, or emergency modes. The system includes a positioning system for generating position data related to a geographic location of the system, and a wireless communication device.

In EP 1 473 543 A2 it is described a parcel based method for updating portions of a geographic database.

EP 1 385 102 A1 discloses provision of a master geographic database from which an original compiled database is generated that has data organized in parcels in which records are gathered during an incremental updating process updated parcels are obtained from an updated master geographic database by compilation and differences between the updated parcels and the parcels of the original compiled database are identified. The incremental update transaction is a representation of the differences between a parcel of the original compiled database and a corresponding updated parcel. In the end user's system the data in the incremental update transaction is used to form an updated database. Alternatively, an updated parcel is directly send to the database of the end user for the updating process.

Navigation databases for vehicles comprise digital map databases usually stored on removable storage media as CDs or DVDs. However, recently the data amount of vehicle navigation databases has increased drastically (up to some 10 GB, presently), partly due to the introduction of terrain models and three-dimensional views of intersections and landmarks. Therefore, recent navigation systems include digital map databases stored on hard disk drives on which the databases are pre-installed.

The content of the navigation databases has to be updated relatively frequently in order to secure a reliable and optimized route guidance. Usually providers supply one or two update releases on an annual basis. New releases of the entire database are supplied on CDs or DVDs. If the navigation database is installed on a hard disk drive, new database releases have usually to be copied to the hard disk by service staff whereby time consumption and costs of database updates are increased significantly. Moreover, present vehicle navigation databases are read-only databases. This implies that they can only be updated by a replacement of the entire database. Again, costs and time consumption are undesirably high.

Another problem with present day navigation database updates concerns the fact that after extensions of the database format the newly released database can only be read with an appropriate new software. This software must either be supplied along with the new storage medium including the new database, in which case the navigation system has to download and install the new software, or, even worse, the software must be updated by service staff before the new database can be read.

Thus, there is a need for reducing the time and costs for database updates. Moreover, the user shall be provided with the opportunity to update the presently used navigation database according to his needs and price consciousness.

### Description of the invention

The above-mentioned problems are solved by the method according to claim 1, i.e., a method for updating, during an actual drive, a first navigation database of a vehicle navigation system used for route guidance, wherein the first navigation database stores data in blocks, each of the blocks containing at least one record constituting a source object, the source object including data of one of a map geometry, road topology on a lowest organization level or name attributes of cities and streets;
comprising the steps of
providing a second navigation database storing data in blocks corresponding to the blocks of the first navigation database, each of the blocks containing at least one record constituting a source object and at least one of the blocks containing at least one record constituting a derived object, wherein the derived object includes data already known from a source object or other derived objects but on a higher organization level and wherein the derived object is usable for acceleration of operation of navigation software; and wherein the second database differs from the first navigation database at least in one of the source objects;
compiling source objects of the first navigation database to generate derived objects of the first navigation database;
compiling a subset of source objects of the second navigation database that consists only of source objects that differ from the corresponding source objects constituted in the first navigation database to generate derived objects of the second navigation database;
grouping all of the source objects of the first navigation database and the derived objects generated by the compilation of the source objects of the first navigation database in blocks of the first navigation database;
grouping all of the source objects of the second navigation database and the derived objects generated by the compilation of the source objects of the second navigation database in blocks of the second navigation database corresponding to the grouped blocks of the first navigation database, wherein corresponding grouped block include corresponding records constituing the same or similar objects;
comparing the blocks of the first navigation database resulting from the grouping with the corresponding blocks of the second navigation database resulting from the grouping to determine blocks of the second navigation database that differ from the corresponding blocks of the first navigation database; and
generating an update package for the first navigation database comprising only blocks of the second navigation database that are determined by the comparison step to differ from the corresponding blocks of the first navigation database; and
wherein the first navigation database contains information about the dependency of the derived objects on other derived objects and source objects and only those derived objects of the first navigation database are generated by the compiling that are derived from source objects or derived objects of the first navigation database that differ from the corresponding source objects or the corresponding derived objects of the second navigation database.

Subsequently, the update package is installed in the navigation system of a user that comprises the first navigation database for updating the first navigation database.

The data of each of the databases is organized in logically related blocks. Each of the blocks contains a number of records that specify objects and their attributes. Typically objects are roads, landmarks and points of interest (POIs), e.g., service stations, police stations, hotels, restaurants, represented in a digital map presented to the driver; attributes may be, e.g., the kind of food offered in a restaurant (e.g., "Italian").

In this application the term "source objects" refers to individual objects (see examples mentioned above) that are not derived from other ones during a database compilation process. The map geometry and road topology at the lowest organization level as well as name attributes of cities and streets are source data.

Derived objects, on the other hand, are objects that are computed (compiled) from source objects during database compilation. Derived objects and data include data already known from source objects or other derived objects but on a higher organization level for acceleration of the operation of the navigation software, as, e.g., a higher level of routing and map display (e.g., on a scale with tiles of some 10 km in a map with a lowest map level showing tiles with an edge length of some hundred meters) and name indices.

Each block is assigned a block number. By corresponding blocks of the first navigation database and the second navigation database blocks are meant that include corresponding records specifying the same or similar objects. If, e.g., the data of the first navigation database and the second navigation database is grouped in n blocks each, block number 1 of the first navigation database corresponds to block number 1 of the second navigation database and so on up to corresponding blocks n of each of the databases.

The subset of source objects of the second navigation database that consists only of source objects that differ from the corresponding source objects specified in the first navigation database is usually much smaller that the set of all source objects of the first navigation database.

It is expressly noted that the case shall be covered in which a new source object, e.g. a newly built street not present in the digital map data of the first navigation database, is included in the second navigation database without any correspondence in the first navigation database. Moreover, it may be preferred that the compiling source objects of the first navigation database to generate derived objects of the first navigation database comprises compiling such source objects of the first navigation database that do not correspondent to any of the source objects of the second navigation database to account for deletion of objects in later releases of the navigation database. If, e.g., a POI has been removed in the time period from the issuance of the first navigation database to the issuance of the second one, the block containing the respective record specifying this object and blocks containing records specifying derived object depending on the POI in the first navigation database can be identified during the comparing of the compiled blocks of the first and the second navigation database.

The second navigation database can be considered as essentially identical to the first navigation database but with some modifications. The second navigation database may be the parent database built by a provider and may represent a modification of an older one in which case the first navigation database can be a copy of the older parent database. For example, some of the source objects of the second database differ from the corresponding ones in the first database. The update package may be generated from the first navigation database as it is physically realized in a particular vehicle or from an identical copy of the first navigation database. In the first case, the compilation and the generation of the update package has to be carried out on the target navigation system and, thus, requires that at least parts of the compiler software have to be installed on the target navigation system the navigation database of which is to be updated. In the second case, the update system can be generated by the provider or by the customer on his own PC.

By the above described method, the user of a navigation database is given the opportunity to update the presently used navigation database fully or partly rather than substituting it with an entire new version of the database. The user, thus, can profit from latest modifications of the used navigation database with a reduced expenditure of time and reduced costs.

According to one aspect of the method disclosed herein, the subset of source objects of the second navigation database that consists only of source objects that differ from the corresponding source objects specified in the first navigation database does not necessarily include all source objects that differ from the corresponding source objects specified in the first navigation database. According to a further alternative provided by the inventive method the update package may comprise all of the blocks of the second navigation database that differ from the corresponding ones of the first navigation database or only part of it. The user may select source objects of the second navigation database used for the compilation as well as blocks to be contained in the update package.

Thus, the user of the first navigation system in enabled to update the database according to his needs and financial decision. It may be, e.g., that in the second database containing data for digital maps for, say, whole Europe, data relating to Italy and Germany are amended with respect to the first navigation database. The user of the first navigation database may, however, only be interested in an updated version of the digital map data relating to Italy. Accordingly, the update package that is installed in the navigation system of the user for an update of the first navigation database may only contain blocks of the source objects and the derived objects of the second navigation database that differ from the respective blocks of the first navigation database and relate to the digital map representation of Italy.

In general, the blocks of the second navigation database that differ from the corresponding blocks of the first navigation database may represent a city or a country or a province or a federal state or a continent, i.e. the data organized in the blocks represent digital map data of these geographic entities. A block update for a city or a country can, therefore, be carried out very comfortably and in a time efficient way by selecting the respective blocks for an update.

Since each derived object is compiled from one or more source objects and/or derived objects, for each of the derived objects a dependency relation with respect to the objects (either source objects or derived objects) from which it is derived is established. The compilation of the database is performed by a database compiler that has access to all derived objects created in a previous compilation and information about the dependency relations. The compiler usually has to be installed in the navigation system of the user who wants to update the navigation database of his system. Alternatively, is has to be installed on a remote computer and compilation has to be performed for an exact copy of the database that is physically present on some storage medium used by the navigation system installed in the vehicle.

The database compiler is enabled to scan all object dependencies. Based on the information about the dependency relations the database compiler only (re)builds those derived objects that depend on objects that correspond to objects that have been changed in the second navigation database with respect to the corresponding objects of the first navigation database. Such changes have to be determined before the compilation process of the first navigation database. It should be noted that compilation of the second database may be performed by a similar incremental compilation. If some source object of the second navigation database is changed, it is not necessary to compile the entire second navigation database but it is sufficient to (re)build only those derived objects that depend on the changed source object.

Since according to the incremental update/compilation it is not necessary to compile the entire database(s), the updating of the user's navigation database is accelerated significantly.

Each block is preferably assigned a unique block number and within each of the blocks each record is preferably assigned a unique record number. Each object can, thus, be identified uniquely by means of the block number and the record number. The block number and the record number constitute a physical object ID (identification). The data of the first and the second navigation database may further be organized by means of a logical object ID that identifies references between (source or derived) objects of one block and objects of other blocks within one database. The block update according to one of the above examples may modify the ID mapping of logical to physical IDs contained in each of the databases in order to maintain the referential integrity / consistence between unchanged and changed blocks in the first navigation database. After a full update, i.e. for the particular case, that the update package contains as many blocks as the first navigation database, the ID mapping is set to unity, i.e. for each object the logical and the physical IDs are set equal.

The blocks, which may be considered as opaque containers, may not be data compressible, i.e. cannot be data compressed after building of the entire database and are not to be de-compressed before a new compilation. Data compression may only be carried out for the records contained in the blocks. In this case, each block is directly accessible for the compilation and updating process without the need for a time-consuming of large parts of the database.

The records may have a self-describing format in order to guarantee forward and backward compatibility of different versions of the same navigation database and, in particular, the update by means of an update package for the first navigation database generated on the basis of the second navigation database that represents a newer version of the first one. What is more, the navigation software is, thus, enabled to use the navigation database even after a relatively huge number of updates that may introduce new kinds of records intended for use in newer versions of the navigation software. In this case unknown record types or unknown specified attributes of known records are simply skipped by the software of the navigation system.

The first and the second navigation databases may preferably be object-oriented database, i.e., in particular, no relational databases but databases with transparent persistence.

It is also provided a computer program product, comprising one or more computer readable media having computer-executable instructions for performing the steps of one of the above described examples of the inventive method for updating a navigation database.

The present invention also provides a navigation database configured to be updated by one of the above described methods and navigation system for a vehicle comprising a navigation database configured to be updated by one of the above explained examples for a method for updating a navigation database.

Such a navigation system can be much easier provided with new releases of digital map data, which are necessary for safe and efficient route guidance, than it is possible in the art. The navigation system may comprise an Internet connection configured such that the above described updating of the navigation database can be carried out via the Internet. Even if this is a relatively slow manner of updating, it is convenient to have a direct access to new update packages provided via the Internet. Moreover, the updating procedure may be carried out substantially automatically such that the customer may not be concerned with the actual updating during an actual drive.

Additional features and advantages of the invention will be described with reference to the drawings. In the description, reference is made to the accompanying figures that are meant to illustrate preferred embodiments of the invention. It is understood that such embodiments do not represent the full scope of the invention that is defined by the claims given below.
Figure 1 illustrates the generation of an update package for updating a navigation database according to the herein disclosed method.
Figure 2 illustrates basic characteristics of the incremental updating of a navigation database according to the herein disclosed method.

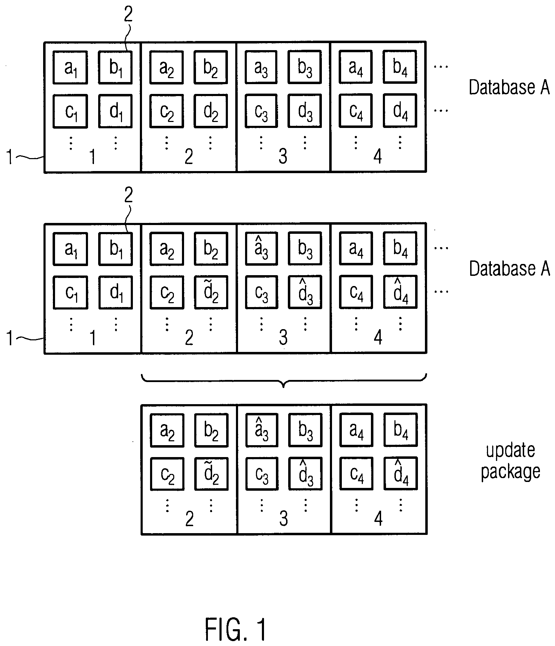

Consider the update of a navigation database A by means of a new database B that is a copy of the database A with the exception that some of the records 2 built in blocks 1 are modified (see Figure 1). In each of the databases, data is grouped in logically related blocks 1 that typically have sizes of 5 to 64 kbytes.

Each of the blocks includes records, e.g., up to 2¹⁶ records. Each record may, in principle, comprise different data types as integer numbers, character strings, pointers, etc.. Moreover, each record specifies uniquely an object, e.g., a road, a polygon, a street intersection, a landmark, etc., and the attributes of the object, e.g., closure of a street, speed limit zone, etc. Preferably, the records have a self-describing format allowing the software of the navigation system to skip unknown record types and unknown attributes of records with known types in order to be open for future supplements of the navigation database.

Each block 1 is treated as an opaque container and is assigned a unique block number. Each record 2 within a block is assigned a record number. By the block number and the record number each object can be uniquely identified. Within each block 1 objects can be referenced by position and offset. References between objects specified by records 2 of different blocks are specified by logical object IDs that are composed of a logical block number and a logical record number.

In principle, an object update of database A could be carried out comprising the steps of de-compressing the blocks 1 containing records specifying objects that are changed in the corresponding blocks of database B (in the shown example these are blocks 2, 3, and 4), performing the update on the de-compressed blocks by installing the generated update package and compressing the updated blocks and writing them to a storage means, e.g., a re-writable hard disk or CD or DVD. According to the present example, however, data compression is only used within blocks, i.e. each block itself is directly accessible without de-compressing.

As shown in Fig. 1 both databases A and B comprise a block No. 1 each. Both No. 1 blocks contain records 2 labeled a₁, b₁, c₁, and d₁. According to the data structure record a₁ of database A corresponds to record a₁ of database B, record b₁ of database A to record b₁ of database B, etc. In fact, in the present example blocks No. 1 are identical in both databases.

In database B block No. 2 contains records ã₂ and d̃₂ that are modified with respect to the corresponding records a₂ and d₂ of database A. Moreover, block No. 3 of database B contains records â₃ and d̂₃ and block No. 4 of database B contains the record d̂₄, where the circumflex denotes that the thus marked record specifies an object that is derived from one or each of the modified objects ã₂ and d̃₂ of block No. 2. The derived objects represent data compiled from one of the modified objects ã₂ and d̃₂ by a database compiler. The derived objects represent data generated to speed up operation of the navigation system. The map geometry and the road topology at the lowest levels as well as street names, e.g., represent source data, whereas high-level tiles of roads can be derived from elementary 0-level tiles. The lowest (0) - level tiles are distinguished from the higher level tiles by the represented edge length. The lowest level scale may comprise tiles of some hundred meters whereas higher levels may comprise km-tiles.

Database A provides information about the dependencies of objects on other derived or source (not derived) objects. In the present example a₂ and d₂ of database A and the corresponding modified versions ã₂ and d̃₂ in database B are regarded as specifying source objects. When this information about the dependencies of objects is scanned during the compilation being part of the update procedure, the database compiler will learn that, in particular, records a₃, d₃, and d₄ depend on records a₂ or d₃, i.e. the objects specified by the records a₃, d₃, and d₄ are derived from the objects specified by the records a₂ or d₃.

An update package is obtained by means of database B including blocks No. 2, 3, and 4 only. Thus, a partial block update of the database A can be performed by installing the update package. According to the incremental block update also taught in this application, only those blocks are updated that contain records specifying objects that are derived from or correspond to objects that are modified in database B with respect to A. If in database B a source object has been modified with respect to database A, the block containing this source object is included in the update package.

However, not all of the objects contained in block A are to be compiled for the update procedure. On the other hand, it is secured that all blocks containing records that depend on modified records are updated whether or not they include records specifying source objects that are modified in database B with respect to database A.

If, e.g., ã₂ specifies an object representing a street with a modified attribute, e.g., a changed street name or a new traffic light, on a low level characterized by elementary tiles of, say some hundred meters, â₃ may be a record specifying the same street but on a higher level of graphical representation with tiles of say some km. Update of a₂ in database A requires for update of a₃ and, thus, for updating block 3 during the block update.

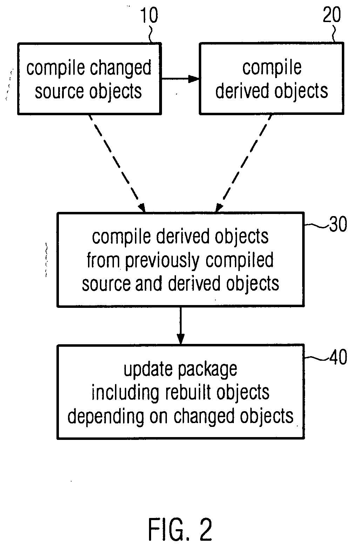

Figure 2 illustrates basic characteristics of the herein disclosed incremental block update of a navigation database. During update of a navigation database a database compiler compiles source objects that are modified 10 and also a number of derived objects 20 on which other derived objects may depend. In a subsequent step, derived objects are compiled from at least some of the previously compiled source objects and derived objects 30. The dependency relation thus introduced can be used for an incremental database compiling. Since the database compiler has access to all previously compiled derived objects, the compiler can scan all object dependencies, namely dependencies on source objects or other derived objects, and rebuilds only objects that depend on modified ones (either source objects or derived objects) in order to generate an update package.

Thus, the entire compilation process necessary for the update procedure is accelerated as compared to a brute force partial or full update that requires for compilation of all source objects. After completion of the compilation process an update package can be built 40 that includes all rebuilt objects that depend on changed objects.

The previously discussed examples are not intended as limitations but serve as examples illustrating features and advantages of the invention. It is to be understood that some or all of the above described features can also be combined in different ways.

## Claims

1. Method for updating, during an actual drive, a first navigation database (A) of a vehicle navigation system used for route guidance, wherein the first navigation database (A) stores data in blocks (1), each of the blocks (1) containing at least one record (2) constituting a source object, the source object including data of one of a map geometry, road topology on a lowest organization level or name attributes of cities and streets;
comprising the steps of
providing a second navigation database (B) storing data in blocks (1) corresponding to the blocks (1) of the first navigation database (A), each of the blocks (1) containing at least one record (2) constituting a source object and at least one of the blocks (1) containing at least one record (2) constituting a derived object, wherein the derived object includes data already known from a source object or other derived objects but on a higher organization level and wherein the derived object is usable for acceleration of operation of navigation software; and wherein the second database (B) differs from the first navigation database (A) at least in one of the source objects;
compiling source objects of the first navigation database (A) to generate derived objects of the first navigation database (A);
compiling a subset of source objects of the second navigation database (B) that consists only of source objects that differ from the corresponding source objects constituted in the first navigation database (A) to generate derived objects of the second navigation database (B);
grouping all of the source objects of the first navigation database (A) and the derived objects generated by the compilation of the source objects of the first navigation database (A) in blocks (1) of the first navigation database (A);
grouping all of the source objects of the second navigation database (B) and the derived objects generated by the compilation of the source objects of the second navigation database (B) in blocks (1) of the second navigation database (B) corresponding to the grouped blocks (1) of the first navigation database (A), wherein corresponding grouped block include corresponding records constituing the same or similar objects;
comparing the blocks (1) of the first navigation database (A) resulting from the grouping with the corresponding blocks (1) of the second navigation database (B) resulting from the grouping to determine blocks (1) of the second navigation database (B) that differ from the corresponding blocks (1) of the first navigation database (A); and
generating an update package for the first navigation database (A) comprising only blocks (1) of the second navigation database (B) that are determined by the comparison step to differ from the corresponding blocks (1) of the first navigation database (A); and
wherein the first navigation database (A) contains information about the dependency of the derived objects on other derived objects and source objects and only those derived objects of the first navigation database (A) are generated by the compiling that are derived from source objects or derived objects of the first navigation database (A) that differ from the corresponding source objects or the corresponding derived objects of the second navigation database (B).

2. Method according to claim 1, wherein the subset of source objects of the second navigation database (B) that consists only of source objects that differ from the corresponding source objects constituted in the first navigation database (A) does not include all source objects that differ from the corresponding source objects constituted in the first navigation database (A).

3. Method according to claim 1 or 2, wherein the update package comprises not all of the blocks (1) of the second navigation database (B) that differ from the corresponding blocks (1) of the first navigation database (A).

4. Method according to claim 3, wherein the update package comprises blocks (1) of the second navigation database (B) that differ from the corresponding blocks (1) of the first navigation database (A) and that represent a city or a country or a province or a federal state or a continent in form of digital map data.

5. Method according to one of the above claims, comprising compiling such source objects of the first navigation database (A) that do not correspondent to any of the source objects of the second navigation database (B).

6. Method according to one of the preceding claims, wherein
each block is assigned a unique block number and each record within a block is assigned a unique record number such that each object is identified by a physical object ID composed of a block number and a record number; and
references between objects of different blocks (1) of the first and the second navigation database (B)s, respectively, are identified by a logical object ID composed of a logical block number and a logical record number; and
after installing the update package for updating the first navigation database (A) for each object the physical object ID is set equal to the logical object ID, if the update package comprises a number of blocks (1) that is equal to the number of blocks (1) of the first navigation database (A).

7. Method according to one of the preceding claims, wherein the records are data compressible and data de-compressible and the blocks (1) are not data compressible.

8. Method according to one of the preceding claims, wherein the records have a self-describing format.

9. Method according to one of the preceding claims, wherein the first navigation database (A) and the second navigation database (B) are object-oriented databases.

10. Computer program product, comprising one or more computer readable media having computer-executable instructions for performing the steps of the method according to one of the claims 1 - 9.

11. Navigation system for a vehicle, comprising a navigation database configured to be updated by one of the methods according to one of the claims 1 to 9.

12. Navigation system according to claim 11, further comprising an Internet connection configured for updating the navigation database by one of the methods according to one of the claims 1 to 9 via the Internet.

## Patentansprüche

1. Verfahren zur Aktualisierung einer ersten Navigationsdatenbank (A) eines zur Routenführung verwendeten Fahrzeugnavigationssystems während einer Fahrt, wobei die erste Navigationsdatenbank (A) Daten in Blöcken (1) speichert, wobei jeder der Blöcke (1) mindestens einen Datensatz (2) enthält, der ein Quellobjekt darstellt, wobei das Quellobjekt Daten von einer von einer Kartengeometrie, einer Straßentopologie auf einer untersten Organisationsebene oder Namensattributen von Städten und Straßen enthält;
umfassend die Schritte von
Bereitstellen einer zweiten Navigationsdatenbank (B), die Daten in Blöcken (1) speichert, die den Blöcken (1) der ersten Navigationsdatenbank (A) entsprechen, wobei jeder der Blöcke (1) mindestens einen Datensatz (2) enthält, der ein Quellobjekt darstellt und mindestens einer der Blöcke (1) enthält mindestens einen Datensatz (2), der ein abgeleitetes Objekt darstellt, wobei das abgeleitete Objekt Daten enthält, die bereits von einem Quellobjekt oder anderen abgeleiteten Objekten bekannt sind, jedoch auf einer höheren Organisationsebene, und wobei das abgeleitete Objekt zur Beschleunigung des Betriebs von Navigationssoftware verwendbar ist; und wobei sich die zweite Datenbank (B) von der ersten Navigationsdatenbank (A) zumindest in einem der Quellobjekte unterscheidet;
Zusammenstellen von Quellobjekten der ersten Navigationsdatenbank (A), um abgeleitete Objekte der ersten Navigationsdatenbank (A) zu erzeugen;
Zusammenstellen einer Untergruppe von Quellobjekten der zweiten Navigationsdatenbank (B), die nur aus Quellobjekten besteht, die sich von den entsprechenden in der ersten Navigationsdatenbank (A) gebildeten Quellobjekten unterscheiden, um abgeleitete Objekte der zweiten Navigationsdatenbank (B) zu erzeugen; Gruppieren aller Quellobjekte der ersten Navigationsdatenbank (A) und der durch das Zusammenstellen der Quellobjekte der ersten Navigationsdatenbank (A) erzeugten abgeleiteten Objekte in Blöcken (1) der ersten Navigationsdatenbank (A);
Gruppieren aller Quellobjekte der zweiten Navigationsdatenbank (B) und der durch das Zusammenstellen der Quellobjekte der zweiten Navigationsdatenbank (B) erzeugten abgeleiteten Objekte in Blöcken (1) der zweiten Navigationsdatenbank (B) entsprechend den gruppierten Blöcken (1) der ersten Navigationsdatenbank (A), wobei die entsprechenden gruppierten Blöcke entsprechende Datensätze enthalten, die die gleichen oder ähnliche Objekte bilden;
Vergleichen der aus der Gruppierung resultierenden Blöcke (1) der ersten Navigationsdatenbank (A) mit den aus der Gruppierung resultierenden entsprechenden Blöcken (1) der zweiten Navigationsdatenbank (B) zum Ermitteln von Blöcken (1) der zweiten Navigationsdatenbank (B), die sich von den entsprechenden Blöcken (1) der ersten Navigationsdatenbank (A) unterscheiden; und
Erzeugen eines Aktualisierungspakets für die erste Navigationsdatenbank (A), das nur Blöcke (1) der zweiten Navigationsdatenbank (B) umfasst, die von dem Vergleichsschritt bestimmt werden, dass sie sich von den entsprechenden Blöcken (1) der ersten Navigationsdatenbank (A) zu unterscheiden; und wobei die erste Navigationsdatenbank (A) Informationen über die Abhängigkeit der abgeleiteten Objekte von anderen abgeleiteten Objekten und Quellobjekten enthält und nur diejenigen abgeleiteten Objekte der ersten Navigationsdatenbank (A) durch das Zusammenstellen erzeugt werden, die von Quellobjekten oder abgeleiteten Objekten der ersten Navigationsdatenbank (A) abgeleitet sind, die sich von den entsprechenden Quellobjekten oder den entsprechenden abgeleiteten Objekten der zweiten Navigationsdatenbank (B) unterscheiden.

2. Verfahren nach Anspruch 1, wobei die Untergruppe der Quellobjekte der zweiten Navigationsdatenbank (B), die nur aus Quellobjekten besteht, die sich von den entsprechenden Quellobjekten unterscheiden, die in der ersten Navigationsdatenbank (A) gebildet sind, nicht alle Quellobjekte beinhaltet, die sich von den entsprechenden Quellobjekten unterscheiden, die in der ersten Navigationsdatenbank (A) gebildet sind.

3. Verfahren nach Anspruch 1 oder 2, wobei das Aktualisierungspaket nicht alle der Blöcke (1) der zweiten Navigationsdatenbank (B), die sich von den entsprechenden Blöcken (1) der ersten Navigationsdatenbank (A) unterscheiden, umfasst.

4. Verfahren nach Anspruch 3, wobei das Aktualisierungspaket Blöcke (1) der zweiten Navigationsdatenbank (B) umfasst, die sich von den entsprechenden Blöcken (1) der ersten Navigationsdatenbank (A) unterscheiden und die eine Stadt oder ein Land oder eine Provinz oder einen Bundesstaat oder einen Kontinent in Form von digitalen Kartendaten repräsentieren.

5. Verfahren nach einem der vorhergehenden Ansprüche, umfassend das Zusammenstellen von solchen Quellobjekten der ersten Navigationsdatenbank (A), die keinem der Quellobjekte der zweiten Navigationsdatenbank (B) entsprechen.

6. Verfahren nach einem der vorstehenden Ansprüche, wobei jedem Block eine eindeutige Blocknummer zugeordnet ist, und jedem Datensatz innerhalb eines Blocks eine eindeutige Datensatznummer zugeordnet ist, so dass jedes Objekt durch eine physikalische Objekt-ID identifiziert wird, die aus einer Blocknummer und einer Datensatznummer besteht; und
Referenzen zwischen Objekten unterschiedlicher Blöcke (1) der ersten beziehungsweise der zweiten Navigationsdatenbank (B) werden jeweils durch eine logische Objekt-ID identifiziert, die aus einer logischen Blocknummer und einer logischen Datensatznummer besteht; und
nach dem Installieren des Aktualisierungspakets zum Aktualisieren der ersten Navigationsdatenbank (A) für jedes Objekt die physikalische Objekt-ID gleich der logischen Objekt-ID gesetzt wird, wenn das Aktualisierungspaket eine Anzahl von Blöcken (1) enthält, die der Anzahl der Blöcke (1) der ersten Navigationsdatenbank (A) entspricht.

7. Verfahren nach einem der vorstehenden Ansprüche, wobei die Datensätze datenkomprimierbar und datendekomprimierbar sind und die Blöcke (1) nicht datenkomprimierbar sind.

8. Verfahren nach einem der vorstehenden Ansprüche, wobei die Datensätze ein selbstbeschreibendes Format haben.

9. Verfahren nach einem der vorstehenden Ansprüche, wobei die erste Navigationsdatenbank (A) und die zweite Navigationsdatenbank (B) objektorientierte Datenbanken sind.

10. Computerprogrammprodukt, umfassend ein oder mehrere computerlesbare Medien, die computerausführbare Anweisungen zum Durchführen der Schritte des Verfahrens nach einem der Ansprüche 1 bis 9 aufweisen.

11. Navigationssystem für ein Fahrzeug, umfassend eine Navigationsdatenbank, die konfiguriert ist, um durch eines der Verfahren nach einem der Ansprüche 1 bis 9 aktualisiert zu werden.

12. Navigationssystem nach Anspruch 11, ferner umfassend eine Internetverbindung, die zum Aktualisieren der Navigationsdatenbank durch eines der Verfahren nach einem der Ansprüche 1 bis 9 über das Internet konfiguriert ist.

## Revendications

1. Procédé de mise à jour, pendant une conduite actuelle, d'une première base de données de navigation (A) d'un système de navigation de véhicule utilisé pour le guidage routier, dans lequel la première base de données de navigation (A) stocke les données dans des blocs (1), chacun des blocs (1) contenant au moins un enregistrement (2) constituant un objet source, l'objet source comprenant des données d'un élément parmi une géométrie de carte, une topologie de route au niveau d'organisation le plus faible ou des attributs de noms de villes et de rues ; comprenant les étapes consistant à :
utiliser une seconde base de données de navigation (B) stockant les données dans des blocs (1) correspondant aux blocs (1) de la première base de données de navigation (A), chacun des blocs (1) contenant au moins un enregistrement (2) constituant un objet source et au moins un des blocs (1) contenant au moins un enregistrement (2) constituant un objet dérivé, dans lequel l'objet dérivé comprend des données déjà connues d'un objet source ou d'autres objets dérivés mais à un niveau d'organisation plus élevé et dans lequel l'objet dérivé est utilisable pour l'accélération de l'exploitation du logiciel de navigation ; et dans lequel la seconde base de données (B) diffère de la première base de données de navigation (A) au niveau d'au moins un des objets source ;
compiler les objets source de la première base de données de navigation (A) pour générer des objets dérivés de la première base de données de navigation (A) ;
compiler un sous-ensemble d'objets source de la seconde base de données de navigation (B) qui ne consiste qu'en des objets source qui diffèrent des objets source correspondants constituant la première base de données de navigation (A) pour générer des objets dérivés de la seconde base de données de navigation (B) ;
grouper l'ensemble des objets source de la première base de données de navigation (A) et des objets dérivés générés par la compilation des objets source de la première base de données de navigation (A) en blocs (1) de la première base de données de navigation (A) ;
grouper l'ensemble des objets source de la seconde base de données de navigation (B) et des objets dérivés générés par la compilation des objets source de la seconde base de données de navigation (B) en blocs (1) de la seconde base de données de navigation (B) correspondant aux blocs groupés (1) de la première base de données de navigation (A), dans lequel les blocs groupés correspondants comprennent des enregistrements correspondants constituant les mêmes objets ou des objets similaires ;
comparer les blocs (1) de la première base de données de navigation (A) résultant du groupage avec les blocs correspondants (1) de la seconde base de données de navigation (B) résultant du groupage pour déterminer les blocs (1) de la seconde base de données de navigation (B) qui diffèrent des blocs correspondants (1) de la première base de données de navigation (A) ; et
générer un paquetage de mise à jour pour la première base de données de navigation (A) ne comprenant que les blocs (1) de la seconde base de données de navigation (B) qui ont été déterminés comme différents des blocs correspondants (1) de la première base de données de navigation (A) par l'étape de comparaison ; et
dans lequel la première base de données de navigation (A) contient des informations sur la dépendance des objets dérivés à d'autres objets dérivés et objets source, et seuls sont générés par la compilation les objets dérivés de la première base de données de navigation (A) qui sont dérivés des objets source ou des objets dérivés de la première base de données de navigation (A) qui diffèrent des objets source correspondants ou des objets dérivés correspondants de la seconde base de données de navigation (B).

2. Procédé selon la revendication 1, dans lequel le sous-ensemble d'objets source de la seconde base de données de navigation (B) qui ne consiste qu'en des objets source qui diffèrent des objets source correspondants constituant la première base de données de navigation (A) ne comprend pas tous les objets source qui diffèrent des objets source correspondants constituant la première base de données de navigation (A).

3. Procédé selon la revendication 1 ou 2, dans lequel le paquetage de mise à jour ne comprend pas tous les blocs (1) de la seconde base de données de navigation (B) qui diffèrent des blocs correspondants (1) de la première base de données de navigation (A).

4. Procédé selon la revendication 3, dans lequel le paquetage de mise à jour comprend les blocs (1) de la seconde base de données de navigation (B) qui diffèrent des blocs correspondants (1) de la première base de données de navigation (A) et qui représentent une ville ou un pays ou une province ou un état fédéral ou un continent sous la forme de données de cartes numériques.

5. Procédé selon l'une des revendications ci-dessus, comprenant la compilation de tels objets source de la première base de données de navigation (A) qui ne correspondent à aucun des objets source de la seconde base de données de navigation (B).

6. Procédé selon l'une des revendications précédentes, dans lequel
à chaque bloc est attribué un numéro de bloc unique et à chaque enregistrement au sein d'un bloc est attribué un numéro d'enregistrement unique de sorte que chaque objet est identifié par un identifiant d'objet physique composé d'un numéro de bloc et d'un numéro d'enregistrement ; et
les références entre objets de différents blocs (1) des première et seconde bases de données (B) sont respectivement identifiées par un identifiant d'objet logique composé d'un numéro de bloc logique et d'un numéro d'enregistrement logique ; et
après l'installation du paquetage de mise à jour pour la mise à jour de la première base de données de navigation (A) pour chaque objet, l'identifiant d'objet physique est défini comme étant égal à l'identifiant d'objet logique, si le paquetage de mise à jour comprend un nombre de blocs (1) qui est égal au nombre de blocs (1) de la première base de données de navigation (A).

7. Procédé selon l'une des revendications précédentes, dans lequel les enregistrements sont des données compressibles et des données incompressibles et les blocs (1) ne sont pas des données compressibles.

8. Procédé selon l'une des revendications précédentes, dans lequel les enregistrements ont un format auto-décrivant.

9. Procédé selon l'une des revendications précédentes, dans lequel la première base de données de navigation (A) et la seconde base de données de navigation (B) sont des bases de données orientées vers les objets.

10. Produit-programme informatique, comprenant un ou plusieurs supports lisibles par ordinateur ayant des instructions exécutables par ordinateur permettant de mettre en oeuvre les étapes du procédé selon l'une des revendications 1-9.

11. Système de navigation pour véhicule, comprenant une base de données de navigation configurée pour être mise à jour par l'un des procédés selon l'une des revendications 1 à 9.

12. Système de navigation selon la revendication 11, comprenant en outre une connexion Internet configurée pour mettre à jour la base de données de navigation par l'un des procédés selon l'une des revendications 1 à 9 par l'intermédiaire d'Internet.
